# EUROPÄISCHE PATENTSCHRIFT

(11) **EP 2 945 900 B1**
(45) Veröffentlichungstag und Bekanntmachung des Hinweises auf die Patenterteilung: **26.06.2019**
(21) Anmeldenummer: 14700725.6
(22) Anmeldetag: 17.01.2014
(51) Int. Cl.: B66D 1/16, B66D 1/26, B66B 15/06, F16D 11/14, F16D 28/00

(54) **VERSTECKVORRICHTUNG**
PLUGGING DEVICE
DISPOSITIF D'ACCOUPLEMENT

(30) Priorität: 18.01.2013 DE 102013000830
(43) Veröffentlichungstag der Anmeldung: 25.11.2015
(73) Patentinhaber: Siemag Tecberg GmbH, 35708 Haiger (DE)
(72) Erfinder: SONNEBORN, Stephan, 57334 Bad Laasphe (DE)
(74) Vertreter: Sonnenberg, Fred
(86) Internationale Anmeldenummer: PCT/EP2014/050894
(87) Internationale Veröffentlichungsnummer: WO 2014/111515

(56) Entgegenhaltungen:
- EP-A2- 0 062 029
- WO-A1-2013/079699
- WO-A1-2014/053299
- DE-B3-102012 109 398

## Beschreibung

Die vorliegende Erfindung bezieht sich auf eine Versteckvorrichtung für Fördermaschinen, wie durch den Oberbegriff des unabhängigen Patentanspruches 1 beschrieben. Eine solche Versteckvorrichtung ist aus dem Dokument EP 0 062 029 A2 bekannt.

In der Schacht- und Schrägfördertechnik kommen bei geringen Tiefen bis 500 m und bei großen Tiefen von 1.750 m bis 3.000 m sogenannte Doppeltrommel-Fördermaschinen oder Doppeltrommel-Blair-Fördermaschinen zum Einsatz, welche ein bzw. zwei Seile je Trommel entgegenwirkend auf- bzw. abtrommeln.

Dabei ist in der Regel mindestens eine der Trommeln als Lostrommel und die andere gegebenenfalls als Festtrommel ausgeführt. Die Lostrommel, welche über Gleitbuchsen oder Wälz-lager drehbar auf der Hauptwelle gelagert ist, wird dabei mit einer sogenannten Versteckvor-richtung mit der Hauptwelle verbunden.

Diese Versteckvorrichtung muss als schaltbare Kupplung (Ein- und Auskuppeln) ausgeführt sein, um die beiden Trommeln im Stillstand bei aufgelegter Lostrommelbremse jederzeit relativ zueinander verfahren zu können.

In der Lebensdauer von Förderseilen verändert sich die Längung und Dehnung der Seile aufgrund von Belastungen im Förderbetrieb sowie Eigengewichten. Da sich die verschiedenen Seile der entsprechenden Trommeln dabei jedoch immer unterschiedlich stark längen, müssen im zwei-trumigen Förderbetrieb die beiden Trommeln einer Doppeltrommel-Fördermaschine bzw. einer Doppeltrommel-Blair-Fördermaschine relativ zueinander verfahren werden können, um ein einheitliches und sicheres Vorstehen des einen Fördermittels an der Beladungsstelle auf einer Sohle unter Tage und des anderen Fördermittels an der Entladungsstelle zu gewährleisten. Mit einer Konstellation der beschriebenen Art erreicht man unter anderem einen Ausgleich von Seildehnungen an Be- und Entladungsstellen.

Gleichzeitig kann es im Schacht- und Schrägförderbetrieb aber auch vorkommen, dass die Förderung des Fördergutes von einer Sohle auf eine andere, weiter oben oder unten befindliche, Sohle verlegt werden soll. Auch dazu müssen die beiden Trommeln der Fördermaschine relativ zueinander verfahren werden können, um ein gleichzeitiges Vorstehen des einen Fördermittels an der Entladungsstelle und des anderen Fördermittels an der Beladungsstelle auf der jeweiligen Sohle unter Tage sicherzustellen. Eine Vorrichtung der beschriebenen Art ermöglicht aber auch ein entsprechend schnelles und genaues Anfahren verschiedener Sohlen unter Tage, bei gleichzeitigem Entladen über Tage.

Eine Versteckvorrichtung ist beispielsweise aus den Dokumenten DE 10 2012 109398 B3 und WO 2014/053299 A1 bekannt, bei welcher ein Trommelrad gegenüber einem Losrad durch Verdrehen gesichert wird.

Bekannte Versteckvorrichtungen weisen z.B. ein außenverzahntes Wellenrad und ein innenverzahntes Trommelrad auf, welche beide über ein axial bewegliches, innen- und außenverzahntes Kupplungs- oder Schieberad miteinander verbunden sind.

Dabei ist die Verzahnung des Wellenrades in der Regel so ausgeführt, dass sie bei relativ engem Flankenspiel als Führungsverzahnung dient und immer - auch im ausgekuppelten Versteckzustand der Vorrichtung - im Eingriff mit der Innenverzahnung des Schieberades bleibt.

Geschaltet werden diese Vorrichtungen über einen nicht rotierenden und am Maschinenrahmen geführten Verschiebekragen/ Stellring, welcher das innen- und außenverzahnte Kupplungs- oder Schieberad in axialer Richtung hin und her bewegt und dabei die Verzahnung ein- und auskuppeln kann. Betätigt wird der Verschiebekragen/ Stellring dabei z.B. über zwei doppelt wirkende Hydraulikzylinder, die gegebenenfalls über ein Kniehebelsystem mit dem Verschiebekragen/ Stellring gekoppelt sind.

Nachteilig bei dieser Anordnung ist, dass während des normalen Förderbetriebes stets Relativbewegungen zwischen dem feststehenden Verschiebekragen/ Stellring und dem rotierenden Kupplungsrad auftreten. Diese Relativbewegungen führen zu Verschleiß und damit einhergehendem Wartungsaufwand. Außerdem sind diese Stellen potentielle Störstellen. Nachteilig wirkt sich die Relativbewegung auch auf die Erwärmung und der damit einhergehenden Verformung der Bauteile aus, was den Verschleiß zusätzlich erhöht.

Die Aufgabe der vorliegenden Erfindung ist es daher, eine Versteckvorrichtung der gattungsgemäßen Art vorzusehen, die die genannten Nachteile bekannter Vorrichtungen umgeht, die möglichst einfach zu realisieren ist und einen wartungsarmen, sicheren und wirtschaftlichen Betrieb ermöglicht.

Zur Lösung dieser Aufgabe ist eine Versteckvorrichtung gemäß Anspruch 1 vorgesehen, wobei die lösbare Verbindung der Lostrommel mit der Hauptwelle formschlüssig mittels eines auf einem Wellenrad geführten, ein- und ausrückbaren Schieberades realisiert ist, wobei nach Maßgabe der Erfindung zum Ein- und Ausrücken des Schieberades über dessen Umfang verteilte, punktuelle und unmittelbar auf das Schieberad wirkende Betätigungen vorgesehen sind.

Die Vorteile dieser Anordnung sind, dass kein separater Verstellkragen oder - ring mehr notwendig ist und weniger Massen bewegt werden müssen. Weitere Vorteile liegen in dem deutlich geringeren Verschleiß aufgrund der punktuellen Betätigung sowie die einfache Nachrüstbarkeit bestehender Anlagen. Weiterhin sind die Betätigungen stationär sind und das Schieberad kann über diese hinweg rotieren, so dass die bewegten Massen möglichst gering gehalten werden können. Weiterhin ist das Schieberad mit einem umlaufenden Flansch versehen, auf den die Betätigungen nur während des Versteckvorgangs wirken. Als Betätigungen des Schieberades sind dabei den umlaufenden Flansch umfassende, axial verstellbare Klauen vorgesehen, wobei zwischen der jeweiligen Klaue und dem Flansch ein definiertes Spiel vorgesehen ist, so dass die Klauen nach der Betätigung des Schieberades freigefahren werden können.

In einer bevorzugten Ausführungsform der Versteckvorrichtung sind zumindest zwei über den Umfang des Schieberades verteilte Betätigungen vorgesehen, wobei noch weiter bevorzugt drei über den Umfang des Schieberades verteilte Betätigungen vorgesehen sind.

Die geringe Zahl der Betätigungen macht die Anlage einfach zu montieren und zu warten.

Die Klauen können an zumindest einer ihrer zum umlaufenden Flansch weisenden Innenseiten mit einem Gummipuffer versehen sein, der beim Ein- und/oder Ausrücken in Kontakt mit dem umlaufenden Flansch kommt. Besonders bevorzugt ist insbesondere diejenige Innenseite der Klaue mit einem Gummipuffer versehen, die beim Einrücken des Schieberades mit dem Flansch desselben in Berührung kommt. Auf diese Weise können die Einrückkräfte durch ein sanftes Einrücken reduziert werden.

Zur axialen Verstellung der Klauen können darüber hinaus Elektroverstellgeräte vorgesehen sein, z.B. in Form eines auf eine Zahnstange wirkenden Elektromotors oder einer anderen geeigneten Einrichtung. Durch den Einsatz der Elektroverstellgeräte kann eine kostenintensive Leistungs- und Steuerungshydraulik entfallen.

Schließlich kann die Versteckvorrichtung in einer bevorzugten Ausführungsform auch derart ausgebildet sein, dass das Schieberad mit über den Außen- und den Innenumfang verteilte Zahnsegmente anstelle einer jeweiligen Vollverzahnung versehen ist, zum Eingriff mit korrespondierenden Außen- und Innenverzahnungen an der Lostrommel- und dem Wellenrad. Diese Zahnsegmente können dabei in einer weiterhin bevorzugten Ausführungsform als separate, in das Schieberad einsetzbare und lösbare Elemente ausgebildet sein, die kraft- und/oder formschlüssig mit diesem verbindbar sind. Diese Lösung macht es möglich, verschlissene Zahnsegmente einfach und kostengünstig auszutauschen, ohne, dass sofort das gesamte Kupplungs- bzw. Schieberad ausgetauscht werden muss. Der Einsatz von Zahnsegmenten anstelle einer Vollverzahnung auf dem Außenumfang des Schieberades reduziert die Kosten daher erheblich.

Weitere Eigenschaften und Vorteile der vorliegenden Erfindung ergeben sich aus der folgenden, in keiner Weise beschränkenden, Beschreibung bevorzugter Ausführungsformen der Erfindung im Zusammenhang mit den zugehörigen Figuren; darin zeigt:
Fig. 1 eine bevorzugte Ausführungsform der Versteckvorrichtung in eingekuppeltem Zustand mit 3 Betätigungseinrichtungen;
Fig. 2 eine bevorzugte Ausführungsform der Versteckvorrichtung in eingekuppeltem Zustand mit 2 Betätigungseinrichtungen;
Fig. 3a einen Querschnitt durch die Ausführungsform nach Fig. 2 in ausgekuppeltem Zustand; sowie
Fig. 3b einen Querschnitt durch die Ausführungsform nach Fig. 2 in eingekuppeltem Zustand.

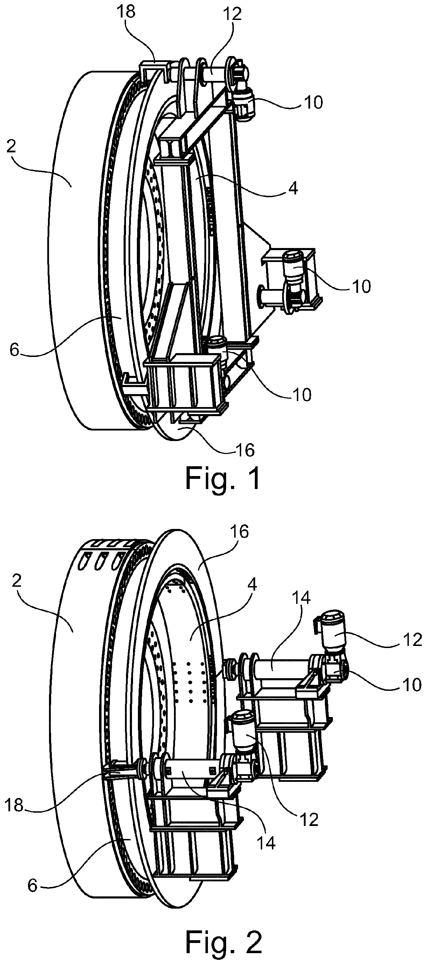

Die Figuren 1 und 2 zeigen zwei bevorzugte Ausführungsformen einer Versteckvorrichtung nach Maßgabe der vorliegenden Erfindung. Beide Figuren zeigen dabei den eingekuppelten Zustand der Versteckvorrichtung. Entsprechende Elemente sind dabei auch mit entsprechenden Bezugszeichen versehen.

So entnimmt man den Figuren 1 und 2 jeweils das Trommelrad (2) einer Doppeltrommel-Fördermaschine, sowie ein entsprechendes Wellenrad (4), welches mit einer (nicht dargestellten) Hauptwelle der Doppeltrommel-Fördermaschine verbunden ist.

Des Weiteren entnimmt man den Figuren 1 und 2 auch einen Kupplungs- oder Schieberad (6), welcher im vorliegenden Fall über eine Außenverzahnung des Wellenrades (4) und eine korrespondierende Innenverzahnung am Schieberad (6) geführt ist.

Ebenfalls entnimmt man den Figuren 1 und 2 über den Umfang des S Schieberads (6) verteilte Betätigungseinrichtungen 10, wobei im Falle der Fig. 1 drei und um Falle der Fig. 2 zwei Betätigungseinrichtungen 10 vorgesehen sind. In den dargestellten Ausführungsformen der Versteckvorrichtung handelt es sich bei den Betätigungsvorrichtungen 10 um Elektroverstellgeräte, mit einem elektrischen Antrieb 12 und einer Schubstange 14.

Wie den Figuren 1 und 2 ebenfalls ohne weiteres zu entnehmen ist, ist das Schieberad 6 jeweils mit einem umlaufenden Flansch 16 versehen. An den zur Lostrommel weisenden Enden der Elektroverstellgeräte 10 sind, wie den Figuren 1 und 2 ebenfalls zu entnehmen ist, den umlaufenden Flansch 16 umfassende, mit Hilfe der Elektroverstellgeräte 10 axial verstellbare Klauen 18 vorgesehen, mit deren Hilfe das Schieberad 6 zwischen das Trommel- 2 und Wellenrad 4 ein- und ausgerückt werden kann. Durch die Elektroverstellgeräte 10 mit den Flansch 16 des Schieberades 6 umgreifenden Klauen 18 erreicht man eine punktuelle und unmittelbar auf das Schieberad 6 wirkende Betätigungen, die den Einsatz von zusätzlichen, zwischengeschalteten Elemente wie z. B. einem Verschiebekragen, überflüssig macht.

Mit Hilfe der Vorrichtung wie bezüglich der Figuren 1 und 2 beschrieben erreicht man also eine formschlüssige, lösbare Verbindung des mit der nicht dargestellten Lostrommel fest verbundenen Trommelrades 2 mit der Hauptwelle (nicht dargestellt) einer Doppeltrommel-Fördermaschine, mittels des auf dem Wellenrad 4 geführten, ein- und ausrückbaren Schieberades 6.

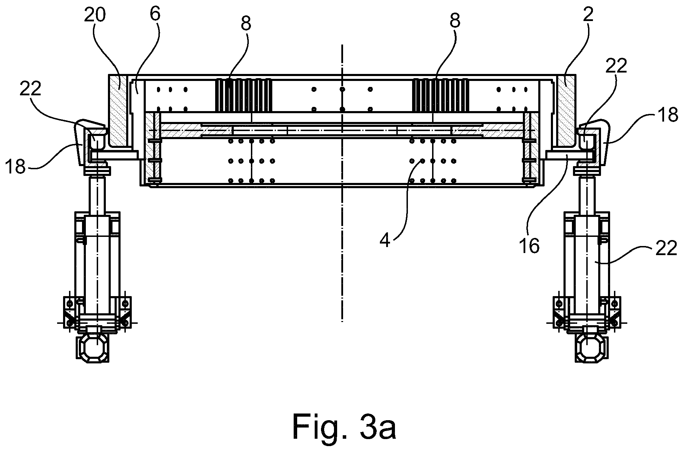

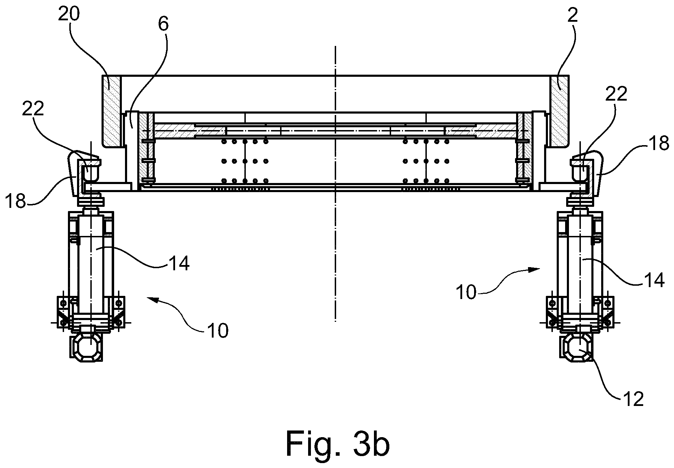

Wie der lösbare Formschluss des Schieberads 6 mit dem Trommelrad 2 zustande kommt, ergibt sich am besten aus den Figuren 3a und 3b, die die Versteckvorrichtung der Figur 2 im Querschnitt zeigt, wobei die Fig. 3a den ausgekuppelten Zustand und die Fig. 3b den eingekuppelten Zustand zeigt. Identische Elemente wie in den Figuren 1 und 2 sind dabei auch mit identischen Bezugszeichen versehen.

Wie den Figuren 3a und 3b zu entnehmen ist, ist das Trommelrad 2 nicht über seine gesamte Breite mit einer Innenverzahnung 20 versehen, sondern nur auf seiner zum Schieberad 2 weisenden Hälfte. Korrespondierend zur Anordnung der Innenverzahnung 20 des Trommelrades 2 weist das Schieberad 6 ebenfalls nur auf seiner zum Trommelrad 2 weisenden Hälfte eine Außenverzahnung auf. Schiebt man das Schieberrad 6 mit Hilfe der Betätigungsvorrichtungen 10 nun in das Trommelrad 2, wie in Fig. 3a gezeigt, so besteht zwischen Wellenrad 4 und Trommelrad 2 keine Verbindung mehr, so dass sich Seillängungen etc. über eine Realativverdrehung des Trommelrades 2 ausgleichen lassen, bevor das Schieberad 6, wie in Fig. 3b gezeigt, durch Herausziehen aus dem Trommelrad 2 wieder mit dem Wellenrad 4 kuppelt.

Wie der Fig. 3a zu entnehmen ist, sind die Innen- und Außenverzahnungen des Schieberades 6 in der dargestellten Ausführungsform nicht als Vollverzahnung, sondern als Zahnsegmente 8 vorgesehen, die in den Außen- (nicht dargestellt) bzw. Innenumfang des Schieberades 6 austauschbar eingesetzt sind, so dass sich ein Verschleiß der formschlüssigen Kupplung durch einfachen Austausch der Zahnsegmente 8 beheben lässt.

Wie sich der Fig. 3a und 3b sehr gut entnehmen lässt, sind die Klauen 18 der Elektroverstellgeräte 10, welche den Flansch 16 des Schieberades 6 umfassen, in Ausrückrichtung, d.h. in Kupplungsrichtung der Vorrichtung mit Gummipuffern 22 versehen. Die durch die um den Umfang des Schieberades 6 erzielte punktuelle Krafteinleitung unmittelbar in das Schieberad 6 wird hier also ergänzt durch eine Reduzierung der Einrückkräfte, da die Gummipuffer 22 bei einer verschobenen Stellung der Innenverzahnung 20 des Trommelrades 2 zu den Zahnsegmenten 8 des Schieberades 6 entsprechend elastisch reagieren können, ohne zu sofortigen Schäden an den sich gegenüberliegenden Verzahnungen zu führen. Eine entsprechende Abschaltung des Einrückvorganges kann dabei durch eine Überwachungseinheit (z. B. Drehmoment-, Kraft- oder Stromstärkeerfassung) an den Elektroverstellgeräten erfolgen.

Die Gummipuffer 22 sind innerhalb der Klauen 18 mit einer entsprechenden Luft gegenüber dem Flansch 16 vorgesehen, so dass sich dieselben zur Verminderung des Verschleißes frei fahren lassen. Der Flansch 16 kann daher ohne Berührung der Gummipuffer 22 oder anderer Teiles der Klauen 18 frei durch diese hindurchdrehen.

Erst im Versteckbetrieb bei aufgelegter Seilträgerbremse (nicht gezeigt) werden die Betätigungsvorrichtungen 10 aus- oder eingefahren und rücken das Schieberad 6 ein oder aus. Beim Ausrücken wird die Arbeitsverzahnung zwischen Trommelrad 2 und Schieberad 6 vollständig getrennt, wobei die Führungsverzahnung zwischen Schieberad 6 und Wellenrad 4 erhalten bleibt.

## Patentansprüche

1. Versteckvorrichtung zur lösbaren Verbindung der zumindest einen drehbar auf der Hauptwelle einer Fördermaschine gelagerten Lostrommel und einem damit fest verbundenen Trommelrad (2) mit dem mit der Hauptwelle fest verbundenen Wellenrad (4), wobei die lösbare Verbindung der Lostrommel mit der Hauptwelle formschlüssig mittels eines auf dem Wellenrad (4) geführten, ein- und ausrückbaren Schieberades (6) realisiert ist, **dadurch gekennzeichnet, dass** zum Ein- und Ausrücken des Schieberades (6) über dessen Umfang verteilte, punktuell und unmittelbar auf das Schieberad (6) wirkende Betätigungen (10) vorgesehen sind, wobei das Schieberad (6) mit einem umlaufenden Flansch (16) versehen ist, auf den die Betätigungen (10) wirken, und wobei die Betätigungen (10) des Schieberades (6) als den umlaufenden Flansch (16) umfassende Klauen (18) vorgesehen sind, wobei die Klauen (18) axial verstellbar sind, und wobei zwischen der jeweiligen Klaue (18) und dem Flansch (16) ein definiertes Spiel vorgesehen ist.

2. Versteckvorrichtung nach Anspruch 1, **dadurch gekennzeichnet, dass** zumindest zwei über den Umfang des Schieberades (6) verteilte Betätigungen (10) vorgesehen sind.

3. Versteckvorrichtung nach Anspruch 1 oder 2, **dadurch gekennzeichnet, dass** die Betätigungen (10) stationär sind und das Schieberad (6) während des Betriebes der Fördermaschine über diese berührungslos hinweg rotieren kann.

4. Versteckvorrichtung nach Anspruch 1, **dadurch gekennzeichnet, dass** die Klauen (18) an zumindest einer ihrer zum umlaufenden Flansch (16) weisenden Innenseiten mit einem Gummipuffer (22) oder anderen elastischen Elementen versehen sind, der/die beim Ein- und/oder Ausrücken in Kontakt mit dem umlaufenden Flansch (16) kommt/kommen.

5. Versteckvorrichtung nach einem der Ansprüche 1 bis 4, **dadurch gekennzeichnet, dass** zur axialen Verstellung der Klauen Elektroverstellgeräte (10, 12, 14) oder ähnlich wirkende Vorrichtungen vorgesehen sind.

6. Versteckvorrichtung nach einem der vorhergehenden Ansprüche, **dadurch gekennzeichnet, dass** das Schieberad (6) mit über den Außen- und den Innenumfang verteilte Zahnsegmente (8) versehen ist, zum Eingriff mit korrespondierenden Außen- und Innenverzahnungen (20) an der Lostrommel (2) und dem Wellenrad (4).

7. Versteckvorrichtung nach einem der vorhergehenden Ansprüche, **dadurch gekennzeichnet, dass** die Verschiebewege des Schieberades (6) eine Wegbegrenzung aufweisen.

## Claims

1. Resetting device for a disengageable connection between at least one loose drum rotatably mounted on the main shaft of a hoisting machine and a drum wheel (2) fixedly connected thereto with a shaft wheel (4) fixedly connected to the main shaft, wherein the disengageable connection of the loose drum and the main shaft is accomplished as a positive connection by means of an engageable and disengageable sliding wheel (6) which is guided on the shaft wheel (4), **characterized in that** for engaging and disengaging the sliding wheel (6), actuating means (10) are provided which are distributed over its circumference and act selectively and directly on the sliding wheel (6), wherein the sliding wheel (6) is provided with a circumferential flange (16) on which the actuating means (10) act, and wherein the actuating means (10) of the sliding wheel (6) are provided as claws (18) grasping the circumferential flange (16), wherein the claws (18) are axially adjustable, and wherein a defined clearance is provided between the respective claw (18) and the flange (16).

2. Resetting device according to claim 1, **characterized in that** at least two actuating means (10) distributed over the circumference of the sliding wheel (6) are provided.

3. Resetting device according to claim 1 or 2, **characterised in that** the actuating means (10) are stationary and the slide wheel (6) can rotate contact-free over the hoisting machine during operation thereof.

4. Resetting device according to claim 1, **characterised in that** the claws (18) are provided on at least one of their inner sides facing the circumferential flange (16) with a rubber buffer (22) or other elastic elements which come into contact with the circumferential flange (16) during engagement and/or disengagement.

5. Resetting device according to one of claims 1 to 4, **characterized in that** electric adjusting devices (10, 12, 14) or similarly acting devices are provided for axial adjustment of the claws.

6. Resetting device according to one of the previous claims, **characterized in that** the sliding wheel (6) is provided with toothed segments (8) distributed over the outer and inner circumferences, for engagement with corresponding outer and inner toothing (20) on the loose drum (2) and the shaft wheel (4).

7. Resetting device according to one of the previous claims, **characterized in that** the displacement paths of the sliding wheel (6) have a path limitation

## Revendications

1. Dispositif d'accouplement pour une liaison amovible entre au moins un tambour libre monté pivotant autour de l'arbre principal d'une machine de transport et une roue de tambour (2) qui y est reliée fixement, avec une roue d'arbre (4) fixement reliée à l'arbre principal, la liaison amovible entre le tambour libre et l'arbre principal étant obtenue par correspondance de forme au moyen d'une roue à glissière (6) embrayable et débrayable guidée sur la roue d'arbre (4), **caractérisé en ce que** pour l'embrayage et le débrayage de la roue à glissière (6), des actionneurs sont prévus sur sa périphérie, répartis ponctuellement et agissant uniquement et directement sur la roue à glissière, dans lequel la roue à glissière (6) est munie d'un flanc périphérique (16) sur lequel les actionneurs (10) agissent, et dans lequel les actionneurs (10) de la roue à glissière (6) sont prévus comme des crochets (18) embrassant le flanc périphérique (16), dans lequel les crochets (18) peuvent être déplacés ou ajustés axialement, et dans lequel un jeu défini est prévu entre les crochets respectifs (18) et le flanc (16).

2. Dispositif d'accouplement selon la revendication 1, **caractérisé en ce que** au moins deux actionneurs (10) répartis sur la périphérie de la roue à glissière (6) sont prévus.

3. Dispositif d'accouplement selon les revendications 1 ou 2, **caractérisé en ce que** les actionneurs (10) sont stationnaires et la roue à glissière (6) peut tourner pendant l'actionnement de la machine de transport par-dessus celle-ci sans contact avec celle-ci.

4. Dispositif d'accouplement selon la revendication 1, **caractérisé en ce que** les crochets (18) sont prévus avec un tampon élastique (22) ou autre élément élastique, sur au moins un de leurs coté latéraux faisant face au flanc périphérique (16), qui vient/viennent en contact avec le flanc périphérique (16) lors de l'embrayage et/ou du débrayage.

5. Dispositif d'accouplement selon l'une quelconque des revendications 1 à 4, **caractérisé en ce que**, pour le déplacement axial des crochets, des dispositifs de déplacement électriques (10, 12, 14) ou des dispositif à action similaire sont prévus.

6. Dispositif d'accouplement selon l'une des revendications précédentes, **caractérisé en ce que** la roue à glissière (6) est prévue avec des segments dentés (8) répartis sur la périphérie externe et interne, pour engagement avec une denture (20) externe et interne correspondante sur le tambour libre (2) et la roue d'arbre (4).

7. Dispositif d'accouplement selon l'une des revendications précédentes, **caractérisé en ce que** les mouvements de déplacement de la roue à glissière (6) ont une limite de course.
